# EUROPÄISCHE PATENTSCHRIFT

(11) **EP 1 344 392 B1**
(45) Veröffentlichungstag und Bekanntmachung des Hinweises auf die Patenterteilung: **22.02.2006**
(21) Anmeldenummer: 01271739.3
(22) Anmeldetag: 18.12.2001
(51) Int. Cl.: H04N 3/15

(54) **BILDSENSOREINRICHTUNG MIT ZENTRALVERSCHLUSS**
IMAGE SENSOR DEVICE COMPRISING CENTRAL LOCKING
DISPOSITIF DE DETECTION D'IMAGE A VERROUILLAGE CENTRAL

(30) Priorität: 21.12.2000 DE 10063838
(43) Veröffentlichungstag der Anmeldung: 17.09.2003
(73) Patentinhaber: STMicroelectronics N.V., 1118 BH Schiphol Airport Amsterdam (NL)
(72) Erfinder: BENTHIEN, Stephan, 011099 Dresden (DE)
(74) Vertreter: Hudler, Frank
(86) Internationale Anmeldenummer: PCT/EP2001/015000
(87) Internationale Veröffentlichungsnummer: WO 2002/051130

(56) Entgegenhaltungen:
- WO-A-00/05874
- WO-A-99/66709
- DE-A- 19 825 048

## Beschreibung

Die Erfindung betrifft eine Bildsensoreinrichtung bestehend aus einem insbesondere in CMOS-Technologie ausgebildeten Substrat mit einer integrierten Halbleiterstruktur (ASIC) und einer darüber angeordneten optisch aktiven Dünnschichtstruktur bestehend jeweils aus mindestens einer Schicht aus dotiertem und mindestens einer Schicht aus undotiertem amorphen Silizium, in Form einer TFA-Struktur, wobei in der Horizontalebene der Bildsensoreinrichtung jeweils räumlich benachbarte Bildelemente (Pixel) ausgebildet sind, die jeweils einen optoelektronischen Wandler zum Umwandeln von einfallendem Licht in ein der einfallenden Lichtmenge proportionales Signal, insbesondere einen elektrischen Strom, sowie einen dem optoelektronischen Wandler zugeordneten Kondensator aufweisen, dessen Ladungszustand in Abhängigkeit von dem auf den zugeordneten optoelektronischen Wandler einfallenden Licht variierbar ist, in welchem der vom optoelektronischen Wandler abgegebene Fotostrom während einer vorgegebenen Messdauer aufintegrierbar ist, und dass in jedem Bildelement ein von einer gemeinsamen Steuereinrichtung ansteuerbarer Halbleiterschalter vorgesehen ist, welcher für alle Bildelemente der Bildsensoreinrichtung gemeinsam ansteuerbar ist, wobei einer der gemeinsamen Anschlüsse des Halbleiterschalters und des Detektors mit dem Erdpotential und die anderen Anschlüsse des Detektors bzw. des Kondensators durch den Halbleiterschalter miteinander verbunden sind.

Eine Bildsensoreinrichtung der genannten Art ist aus der Praxis bekannt. Ein solcher Bildsensor besteht aus einem, üblicherweise in CMOS-Technologie hergestellten, Substrat mit halbleitenden Eigenschaften und einer darauf abgeschiedenen Dünnschichtstruktur von optisch aktiven Schichten. Diese Technologie wird als Thin Film on ASIC (TFA-Technologie) bezeichnet. Bei Bildsensoren dieser Art befinden sich die optisch aktiven Schichten auf der Oberseite der ASIC-Substratstruktur, und es sind dort horizontal benachbart jeweils einzelne Bildelemente, Pixel, ausgebildet. Jedes einzelne Bildelement verfügt dabei über einen optoelektronischen, Wandler in Form einer Fotodiode, in der das einfallende Licht in ein der einfallenden Lichtmenge proportionales elektrisches Signal, insbesondere einen elektrischen Strom, umgewandelt wird. Zur Erfassung des Messsignals ist dem optoelektrischen Wandler ein Ladungsspeicher, insbesondere ein Kondensator, zugeordnet, in den während der vorgegebenen Messdauer, d.h. während der sogenannten Integrationsphase, der Fotostrom fließt, so dass der Ladungszustand des Kondensators ein Maß für die innerhalb der Integrationsdauer eingefallene Lichtmenge ist.

Nach Ablauf der Messzeit wird in jedem Pixel der in seinem zugehörigen Kondensator abgespeicherte Messwert ausgelesen und von einer Peripherieelektronik gesteuert weiter verarbeitet.

Solche, aus der Praxis bekannten Bildsensoren verfügten bislang nicht über die Möglichkeit, den Belichtungsprozess durch die gemeinsame Ansteuerung aller einzelnen Bildelemente durchzuführen. Vielmehr wurde in der Praxis so verfahren, dass bei einem matrixorganisierten flächigen Sensor eine Ansteuerung aller Bildelemente innerhalb einer einzelnen Zeile erfolgte, die zugehörigen Messwerte ausgelesen und anschließend die nächste Zeile des Bildsensors entsprechend verarbeitet wurde. Hierdurch ergibt sich ein sogenannter "rollender Verschluss". Ein Nachteil einer solchen Technik besteht darin, dass durch den Zeitversatz bei der zeilenweisen Ansteuerung eine Verzerrung bei der Aufnahme eines bewegten Objektes erfolgt.

Um diesen Nachteil zu vermeiden, wurde in der WO00/05847 A eine Bildsensoreinrichtung mit in der Horizontalebene räumlich benachbarten Pixeln beschrieben, die jeweils einen optoelektronischen Wandler zum Umwandeln von einfallendem Licht in ein der Lichtmenge proportionales elektrisches Signal aufweisen. Jedem optoelektronischen Wandler ist ein Ladungsspeicher zugeordnet, dessen Ladungszustand in Abhängigkeit von dem auf den zugeordneten optoelektronischen Wandler einfallenden Licht variierbar ist. Der Ladungsspeicher ist ein Kondensator, in welchem der vom optoelektronischen Wandler abgegebene Fotostrom während einer vorgegebenen Messzeit (Integrationszeit) aufintegrierbar ist. Außerdem ist jedem Bildelement ein von einer gemeinsamen Steuereinrichtung ansteuerbares Schaltmittel zugeordnet, welches für alle Bildelemente der Bildsensoreinrichtung gemeinsam ansteuerbar ist, wodurch ein sogenannter Zentral verschluss realisiert wird.

Eine ähnliche, Bildsensoreinrichtung geht auch aus der WO99/66709 A hervor.

Der besondere Nachteil dieser Bildsensoren ist darin zu sehen, dass auch nach Ablauf der Integrationszeit, also nach der entsprechenden Ansteuerung des Schaltmittels, eine Bildverfälschung eintritt. Diese Bildverfälschung entsteht durch Diffusion von fotogenerierten Ladungsträgern von Pixel zu Pixel und auch in denjenigen Bereich des Bildsensors, in dem die integrierte Halbleiterschaltung angeordnet ist.

Der Erfindung liegt die Aufgabe zugrunde, eine Bildsensoranordnung der eingangs genannten Art dahingehend weiter zu entwickeln, dass Bildverfälschungen durch Diffusion von fotogenerierten Ladungsträgern und die dadurch bedingte Weiterbelichtung nach Ablauf der vorgegebenen Messzeit zu verhindern.

Diese Aufgabe wird erfindungsgemäß durch die kennzeichnenden Merkmale des Patentanspruchs 1 gelöst. Weitere Ausgestaltungen der Erfindung finden sich in den zugehörigen abhängigen Ansprüchen.

Die Erfindung zeichnet sich dadurch aus, dass aufgrund der zeitgleichen Ansteuerung aller Schaltmittel der einzelnen Bildelemente aufgrund der Struktur des erfindungsgemäßen Bildsensors auch hinsichtlich der optischen Funktionalität ein Bildsensor mit einem Zentralverschluss ausgestattet ist. Bei herkömmlichen Bildsensoren, die in CMOS-Technologie ausgeführt sind, erfolgt eine Diffusion von fotogenerierten Ladungsträgern in denjenigen Bereich des Sensors hinein, in dem die integrierte Halbleiterschaltung angeordnet ist. Aufgrund des Einflusses benachbarter Bildelemente erfolgen bei der bekannten Technologie Ladungsträger-Diffusionsvorgänge nicht nur innerhalb eines einzelnen Pixels, sondern auch zwischen benachbarten Pixeln, d.h. dass fotogenerierte Ladungsträger in nicht erwünschte Richtungen diffundieren und zu Bildverfälschungen führen. Aufgrund dieser unerwünschten Diffusionsströme aus dem Substrat heraus erfolgt eine Weiterbelichtung des Bildelements, obwohl die elektronische Ansteuerung die Belichtung ausgesteuert hatte. Ein solcher Effekt wird bei einem Bildsensor mit dem eingangs genannten Aufbau vermieden, da die einzelnen optoelektronischen Wandler der Pixel sich nicht im Substrat selbst - wie beim Stand der Technik -, sondern in der zusätzlichen Schicht oberhalb des Substrates befinden. Hierdurch erfolgt eine räumlich funktionelle Trennung der optisch aktiven Schichten von den elektronisch wirksamen, so dass die beschriebenen nachteiligen Diffusionsströme in benachbarte Bildelemente vermieden werden, so dass sich funktionell ein echter Zentralverschluss realisieren lässt.

Bevorzugte Ausführungsformen der Erfindung ergeben sich aus den Unteransprüchen.

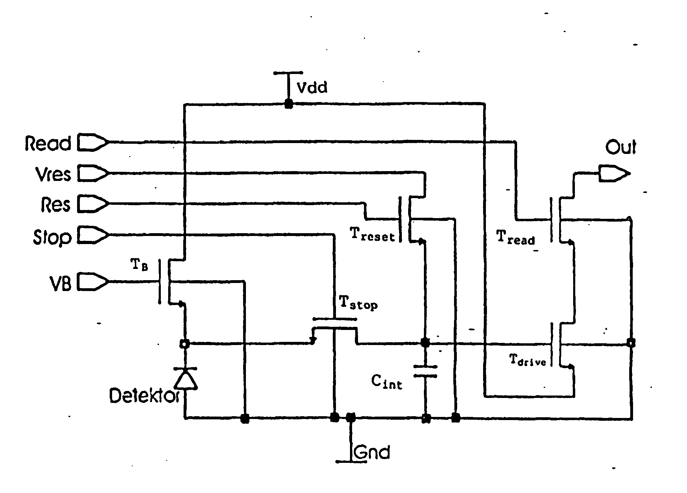

Die Erfindung wird im folgenden anhand einer Zeichnung, die ein Ausführungsbeispiel zeigt, näher erläutert. Der in der Figur dargestellte elektronische Schaltkreis bezieht sich auf ein einzelnes Bildelement und weist einen als Detektor ausgeführten optoelektronischen Wandler auf, dem ein Ladungsspeicher in Form eines Kondensators Cᵢₙₜ parallel geschaltet ist. Einer der gemeinsamen Anschlüsse ist mit dem Erdpotential G_{nd} verbunden, während die anderen Anschlüsse von Detektor bzw. Kondensator Cᵢₙₜ durch einen Halbleiterschalter Tₛₜₒₚ miteinander verbunden sind. Der Bäsisanschluss des Halbleiterschalters (Tₛₜₒₚ) ist mit einem mit "Stop" bezeichneten Potential verbunden. Am Verbindungspunkt zwischen Halbleiterschalter und Detektor ist der Emitter eines weiteren Halbleiterschalters T_{B} vorgesehen, dessen Kollektor mit einem festen Potential Vdd und dessen Basis mit einer Vorspannung VB verbunden ist.

Die übrigen in der Zeichnung dargestellten Elemente betreffen den Auslesevorgang des im Ladungsspeicher abgespeicherten Messwertes und sind für das Verständnis der vorliegenden Erfindung nicht von Bedeutung.

Zu Beginn des Messvorgangs wird der Halbleiterschalter Tₛₜₒₚ an seiner Basis so angesteuert, dass er leitend ist. Hierdurch fließt ein vom optoelektronischen Wandler detektierter Fotostrom in den Ladungsspeicher Cᵢₙₜ. Dabei ist der Detektorstrom, der vom Detektor generiert wird, proportional der auf das Bildelement auffallenden Beleuchtung. Wenn die Integration des Fotostroms beendet werden soll, erfolgt eine Ansteuerung des Halbleiterschalters Tₛₜₒₚ in allen Bildelementen des Bildsensors dahingehend, dass er in den nichtleitenden Zustand geschaltet wird, so dass der Detektorstrom stattdessen'über den geöffneten Transistor T_{B} geleitet wird. Da die Ansteuerung einheitlich und gleichzeitig für alle Halbleiterschalter erfolgt, wird auf diese Weise ein Zenträlverschluss des Bildsensors realisiert, ohne dass es zusätzlicher technischer Maßnahmen bedarf.

## Patentansprüche

1. Bildsensoreinrichtung bestehend aus einem insbesondere in CMOS-Technologie ausgebildeten Substrat mit einer integrierten Halbleiterstruktur (ASIC) und einer darüber angeordneten optisch aktiven Dünnschichtstruktur bestehend jeweils aus mindestens einer Schicht aus dotiertem und mindestens einer Schicht aus undotiertem amorphen Silizium, in Form einer TFA-Struktur, wobei in der Horizontalebene der Bildsensoreinrichtung jeweils räumlich benachbarte Bildelemente ausgebildet sind, die jeweils einen optoelektronischen Wandler zum Umwandeln von einfallendem Licht in ein der einfallenden Lichtmenge proportionales Signal, sowie einen dem optoelektronischen Wandler zugeordneten Kondensator (Cᵢₙₜ) aufweisen, dessen Ladungszustand in Abhängigkeit von dem auf den zugeordneten optoelektronischen Wandler einfallenden Licht variierbar ist, in welchem der vom optoelektronischen Wandler abgegebene Fotostrom während einer vorgegebenen Messdauer aufintegrierbar ist, und dass in jedem Bildelement ein von einer gemeinsamen Steuereinrichtung ansteuerbarer Halbleiterschalter (Tₛₜₒₚ) vorgesehen ist, welcher für alle Bildelemente der Bildsensoreinrichtung gemeinsam ansteuerbar ist, wobei einer der gemeinsamen Anschlüsse des Halbleiterschalters (Tₛₜₒₚ) und des Detektors mit dem Erdpotential (G_{nd}) und die anderen Anschlüsse des Detektors bzw. Kondensators (Cᵢₙₜ) durch den Halbleiterschalter (Tₛₜₒₚ) miteinander verbunden sind, **dadurch gekennzeichnet, dass** am Verbindungspunkt zwischen Halbleiterschalter (Tₛₜₒₚ) und Detektor der Emitter eines weiteren Halbleiterschalters (T_{B}) vorgesehen ist, dessen Kollektor mit einem festen Potential Vdd und dessen Basis mit einer Vorspannung VB verbunden ist.

2. Bildsensoreinrichtung nach Anspruch 1 **dadurch gekennzeichnet, dass** die Bildsensoreinrichtung eine flächige Anordnung von Bildelementen aufweist.

3. Bildsensoreinrichtung nach Anspruch 1 **dadurch gekennzeichnet, dass** die Dünnschichtstruktur eine oder mehrere Schichten von dotiertem und/oder nichtdotiertem amorphen Silizium enthält.

4. Bildsensoreinrichtung nach Anspruch 1 **dadurch gekennzeichnet, dass** die Dünnschichtstruktur eine oder mehrere dünne Schichten Metall enthält.

5. Bildsensoreinrichtung nach Anspruch 1 **dadurch gekennzeichnet, dass** die Dünnschichtstruktur eine oder mehrere dünne Schichten aus einem transparenten Oxid enthält.

## Claims

1. An image sensor consisting, in particular, of a substrate formed using CMOS technology and featuring an integrated semi-conductor structure (ASIC), on top of which is arranged a light sensitive thin-film structure consisting of at least one layer of doped and at least one layer of undoped amorphous silicon respectively in the form of a TFA structure, the horizontal plane of the image sensor containing adjacent pixels, each of which features an optoelectronic converter for converting incident light into a signal that is proportional to the quantity of incident light as well as a capacitor (Cᵢₙₜ) that is assigned to the optoelectronic converter and whose charge condition can be varied depending on the light incident on the assigned optoelectronic converter, in which capacitor the photo current released by the optoelectronic converter can be integrated during a predetermined measurement period, and each pixel is provided with a static switch (Tₛₜₒₚ) that can be triggered by a common control device and can be jointly triggered for all pixels of the image sensor, whereby one of the common connections of the static switch (Tₛₜₒₚ) and of the detector is connected to the earth potential (G_{nd}) and the other connections of the detector and capacitor (Cᵢₙₜ) are connected to one another via the static switch (Tₛₜₒₚ), **characterised in that** the emitter of an additional static switch (T_{B}), whose collector is connected to a fixed voltage Vdd and whose base region is connected to a bias voltage VB, is provided at the junction between the static switch (Tₛₜₒₚ) and the detector.

2. Image sensor according to claim 1, **characterised in that** the image sensor features a two-dimensional arrangement of pixels.

3. Image sensor according to claim 1, **characterised in that** the thin-film structure contains one or several layers of doped and/or undoped amorphous silicon

4. Image sensor according to claim 1, **characterised in that** the thin-film structure contains one or several thin layers of metal.

5. Image sensor according to claim 1, **characterised in that** the thin-film structure contains one or several thin layers of a transparent oxide.

## Revendications

1. Dispositif capteur d'image composé d'un substrat configuré en particulier en technologie CMOS, avec une structure semi-conductrice intégrée (ASIC) et une structure à couche mince optiquement active agencée par-dessus, composée respectivement d'au moins une couche de silicium amorphe dopé et d'au moins une couche de silicium amorphe non dopé, en forme de structure TFA, sachant que des éléments d'image spatialement voisins sont configurés sur la plan horizontal du dispositif capteur d'image, qu'ils présentent chacun un convertisseur optronique destiné à convertir la lumière incidente en un signal proportionnel à la quantité de ladite lumière incidente, ainsi qu'un condensateur (Cᵢₙₜ) affecté au convertisseur optronique, condensateur dont l'état de charge est variable en fonction de la lumière incidente atteignant le convertisseur optronique afférent, condensateur dans lequel le courant photoélectrique émis par le convertisseur optronique est intégrable pendant une période de mesure prescrite et en ce que dans chaque élément d'image est prévu un commutateur statique (Tₛₜₒₚ) excitable par un dispositif de commande conjoint, lequel commutateur est excitable conjointement pour tous les éléments d'image du dispositif capteur d'image, sachant que l'une des bornes conjointes du commutateur statique (Tₛₜₒₚ) et du détecteur est reliée au potentiel de terre (G_{nd}) et que les autres bornes du détecteur et du condensateur (Cᵢₙₜ) sont reliées ensemble par le commutateur statique (Tₛₜₒₚ), **caractérisé en ce qu'**il est prévu, au point de jonction entre le commutateur statique (Tₛₜₒₚ) et le détecteur, l'émetteur d'un autre commutateur statique (T_{B}) dont le collecteur est relié à un potentiel fixe Vdd et dont la base est reliée à une tension de polarisation VB.

2. Dispositif capteur d'image selon la revendication 1, **caractérisé en ce que** le dispositif capteur d'image présente un agencement des éléments d'image sur une certaine surface.

3. Dispositif capteur d'image selon la revendication 1, **caractérisé en ce que** la structure en couches minces présente une ou plusieurs couche(s) de silicium amorphe dopé et/ou non dopé.

4. Dispositif capteur d'image selon la revendication 1, **caractérisé en ce que** la structure en couches minces présente une ou plusieurs couches minces de métal.

5. Dispositif capteur d'image selon la revendication 1, **caractérisé en ce que** la structure en couches minces contient une ou plusieurs couches minces d'un oxyde transparent.
